# DEMANDE DE BREVET EUROPEEN

(11) **EP 3 686 250 A1**
(43) Date de publication de la demande: **29.07.2020**
(21) Numéro de dépôt: 20153933.5
(22) Date de dépôt: 27.01.2020
(51) Int. Cl.: C09D 5/02, C09D 7/42, C09D 7/40, C09D 7/61, C09D 7/65, C08K 13/02, C08K 13/04

(54) **COMPOSITION POUR PEINTURE MATE AMÉLIORÉE**

(30) Priorité: 25.01.2019 FR 1900693
(71) Demandeur: Cromology, 92110 Clichy (FR)
(72) Inventeur: LEFAIT, Pauline, 78360 MONTESSON (FR)
(74) Mandataire: Plasseraud IP

(57) **Abrégé**

L'invention se rapporte à une composition de base pour peinture, plus particulièrement une peinture mate, teintable et présentant une résistance particulièrement améliorée à l'abrasion, au lustrage, au marquage et/ou au traçage. Ladite composition comprend notamment, en pourcentage en poids sec par rapport au poids total de la composition en humide, a.) jusqu'à 15%, préférentiellement de 5 à 15% de liant ; b.) des charges dont b.1) 1 à 15%, préférentiellement 2 à 10% de charges sphériques inorganiques de diamètre médian compris entre 2 et 12 µm, et b.2) 3 à 15%, préférentiellement 3 à 13% de charges sphériques organiques de diamètre médian compris entre 10 et 40 µm. L'invention se rapporte également à une composition de base moyenne et à une peinture obtenue à partir de la composition précédente et à l'utilisation de ladite composition pour la fabrication d'une peinture, en particulier une peinture mate.

## Description

### Domaine technique

L'invention se rapporte à une composition de base pour peinture, plus particulièrement une peinture mate, teintable et présentant une résistance particulièrement améliorée à l'abrasion, au lustrage, au marquage et/ou au traçage. L'invention se rapporte également à une peinture obtenue à partir de la composition précédente et à l'utilisation de ladite composition pour la fabrication d'une peinture, en particulier une peinture mate. La peinture selon l'invention est particulièrement destinée à être appliquée sur des façades et/ou des murs de bâtiment, en particuliers des murs intérieurs.

### Technique antérieure

Les peintures sont classées selon quatre finitions : très mate, mate, satinée ou brillante. Ces finitions correspondent à un indice de brillance, ce dernier étant relatif à la quantité de lumière que la peinture peut réfléchir. Ainsi, plus la peinture est mate et moins elle réfléchit de lumière.

La peinture mate, étant quasiment sans reflet, présente l'avantage de dissimuler ou, tout au moins, d'atténuer les irrégularités des supports. D'autre part, la finition mate est particulièrement appréciée pour son côté esthétique, sobre et feutré. Elle possède en revanche deux inconvénients majeurs : elle est très souvent faiblement lessivable, notamment en raison de sa faible résistance à l'abrasion humide et est, par ailleurs, particulièrement lustrable lors de frottements ou de sollicitations fréquents et/ou de forte intensité et ceci d'autant plus que la peinture présente une teinte foncée ou soutenue. Ainsi, les peintures de type mat sont généralement recommandées uniquement pour les pièces peu exposées à la vie domestique ou pour les plafonds qui, eux, sont généralement hors d'atteinte des agressions.

De nouvelles peintures mates sont aujourd'hui développées pour pallier aux inconvénients ci-dessus.

Le document EP 2 754 699 A1 décrit une base de revêtement pour peintures, notamment pour peintures mates présentant un faible « effet d'écriture », c'est-à-dire une faible propension au marquage/traçage. La base de revêtement proposée comprend notamment au moins un liant polymère et des particules solides de diamètre moyen compris entre 50 et 200 µm. Des mélanges de charges inorganiques et de charges organiques ont été testés et n'ont pas présenté pas de bons résultats en termes de résistance au marquage/traçage.

Le document EP 2 942 376 A1 est relatif à une peinture en émulsion comprenant 10 à 60% en poids de liant, 40 à 90% en poids de charges solides ayant une distribution bimodale, notamment des charges solides de diamètre médian compris entre 40 et 150 µm et d'autres un diamètre médian compris entre 1 et 30 µm, et moins de 5% en poids de charges molles.

Le document EP 3 272 817 A1 décrit une composition de revêtement aqueux utilisable comme peinture en émulsion pour l'intérieur ou l'extérieur, mate et présentant une bonne résistance à l'effet d'écriture. La composition comprend 5-30% en poids sec de polymère avec une taille moyenne de particules de 60 à 300 nm, 0,5 à 8% en poids sec de charge matante de taille moyenne de 0,5 à 9 µm, 2 à 30% en poids sec de charge organique et 30 à 70% en poids d'eau. La composition préférée permettant d'obtenir une résistance élevée aux effets mécaniques (faible effet d'écriture) comprend un polymère d'acrylate de styrène ayant une granulométrie moyenne de 100 à 150 µm, une charge organique correspondant à un polyuréthane réticulé, ayant une taille moyenne de 28 à 33 µm et une charge matante, en particulier de la polyméthylurée, ayant une taille moyenne de particules de 2 à 6 µm.

Il existe également des compositions de peinture commercialisées telles que le produit Kera Paint Premium, PROFITec, comprenant des charges de 0,5 à 100 µm et permettant d'obtenir une peinture mate dont la résistance au lustrage est améliorée. Cependant, ce produit présente une faible résistance à l'abrasion humide.

### Problème technique

Il existe ainsi un besoin de développer une peinture de finition mate, ou même ultra mate, dotée notamment d'une haute résistance au lustrage en blanc, en tons pastels, vifs ou profonds, cette peinture pouvant ainsi être appliquée dans les locaux à forte circulation où il existe des risques de frottements importants. Plus particulièrement, il existe un besoin pour ces peintures mates appliquées dans les locaux à forte circulation de présenter, outre une haute résistance au marquage et au traçage, une résistance à l'abrasion humide améliorée.

### Résumé de l'invention

L'invention vient améliorer la situation.

### Exposé de l'invention

Il est proposé une composition de base pour peinture comprenant :
- en pourcentage en poids sec par rapport au poids total de la composition en humide,
   a. jusqu'à 15%, préférentiellement de 5 à 15% de liant ;
- des charges comprenant :
   b.1.) 1 à 15%, préférentiellement 2 à 10% de charges sphériques inorganiques de diamètre médian compris entre 2 et 12 µm,
   b.2.) 3 à 15%, préférentiellement 3 à 13% de charges sphériques organiques de diamètre médian compris entre 10 à 40 µm ; et
- jusqu'à 75% en poids d'eau par rapport au poids total de la composition en humide.

Selon un autre aspect, il est proposé une composition de base moyenne pour peinture comprenant :
- en pourcentage en poids sec par rapport au poids total de la composition en humide,
   a. jusqu'à 15%, préférentiellement 5 à 15% de liant ;
   b. des charges comprenant :
      b.1) 1 à 15%, préférentiellement 2 à 10% de charges sphériques inorganiques de diamètre médian compris entre 2 et 12 µm,
      b.2) 3 à 15%, préférentiellement 3 à 13% de charges sphériques organiques de diamètre médian compris entre 10 et 40 µm ;
      b.3) jusqu'à 10%, préférentiellement jusqu'à 8%, plus préférentiellement encore jusqu'à 6% d'au moins un agent opacifiant et/ou blanchissant et
- jusqu'à 75% en poids d'eau par rapport au poids total de la composition en humide.

Selon un autre aspect, il est proposé une composition de peinture obtenue à partir de la composition de base précédente.

Selon un autre aspect, il est proposé une composition de peinture obtenue à partir de la composition de base précédente comprenant en outre jusqu'à 16% en volume de pâte(s) pigmentaire(s), préférentiellement jusqu'à 14% en volume et plus préférentiellement jusqu'à 12% en volume.

Selon un autre aspect encore, il est proposé une utilisation de la composition de base précédente pour la fabrication d'une peinture, préférentiellement une peinture mate.

Les caractéristiques exposées dans les paragraphes suivants peuvent, optionnellement, être mises en œuvre. Elles peuvent être mises en œuvre indépendamment les unes des autres ou en combinaison les unes avec les autres :

Il est ainsi proposé une composition de base pour peinture dans laquelle le liant est choisi parmi les résines acryliques, styrène-acryliques, vinyliques ou alkydes, ou encore les résines à base de polyuréthane ou comprenant des dispersions de polyuréthane, prises seules ou en association.

Selon un mode de réalisation, le liant est une résine acrylique, préférentiellement une résine styrène acrylique.

Selon un mode de réalisation, la composition comprend de 3 à 7% en poids sec de charges sphériques inorganiques par rapport au total de la composition en humide.

Avantageusement, les charges sphériques inorganiques ont un diamètre médian compris entre 2 et 6 µm, préférentiellement entre 3 et 5 µm.

Préférentiellement, les charges sphériques inorganiques sont choisies parmi les billes silicatées, préférentiellement les billes de verre et les billes de céramique, prises seules ou en association.

Selon un mode de réalisation, la composition comprend de 3 à 7%, préférentiellement de 4 à 6% en poids sec de charges sphériques organiques par rapport au poids total de la composition en humide ou de 7 à 15%, préférentiellement de 8 à 12% en poids sec de charges sphériques organiques par rapport au poids total de la composition en humide.

Avantageusement, les charges sphériques organiques ont un diamètre médian compris entre 15 et 35 µm, préférentiellement entre 22 et 30 µm.

Préférentiellement, les charges sphériques organiques sont choisies parmi les billes de polyuréthane, les billes de polyacrylate ou polyméthacrylate, prises seules ou en association.

Selon un mode de réalisation, les charges sphériques organiques sont des dispersions non déshydratées de polyuréthane.

La composition peut comprendre en outre jusqu'à 8%, préférentiellement 6%, plus préférentiellement encore 4% en poids sec par rapport au poids total de la composition en humide d'additifs, préférentiellement d'additifs choisis parmi les cires, les additifs siloxanés, les épaississants, les agents coalescents, les agents anti-sédimentation, les agents mouillants, les émulsifiants, les auxiliaires de formation de film, les conservateurs, les biocides, les agents antimousses, les dispersants et les additifs à effet anti-rouille, pris seuls ou en association.

La composition peut également comprendre en outre jusqu'à 10% en poids sec de charge matante par rapport au poids total de la composition de base en humide, préférentiellement jusqu'à 5%, plus préférentiellement jusqu'à 3%.

### Brève description des dessins

D'autres caractéristiques, détails et avantages de l'invention apparaîtront à la lecture de la description détaillée ci-après, et à l'analyse des figures annexées, sur lesquelles :

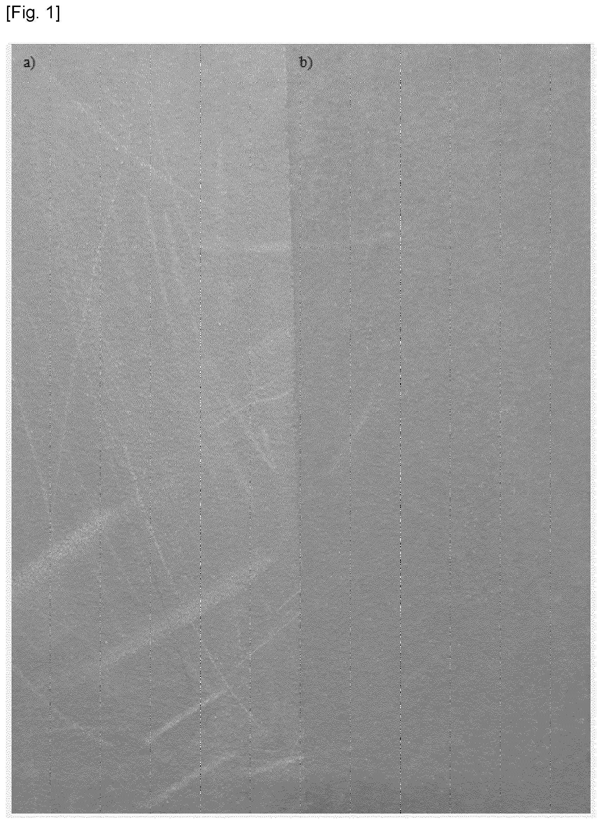

[Fig. 1] correspond à des photographies illustrant le test de marquage/traçage pour
b) une peinture ultramate ayant une bonne résistance au marquage / traçage, il s'agit de l'échantillon 1 des exemples 1 et 2 ;
a) une peinture ultramate ayant une mauvaise résistance au marquage/ traçage, il s'agit d'un échantillon de même formulation que l'échantillon 1 précédent à l'exception des charges qui sont des charges de carbonate de calcium et de sulfate de baryte, non sphériques et de forme irrégulières.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Dans le cadre de la présente description et, sauf mention contraire, on entend par « un » ou « une », « au moins un » ou « au moins une » respectivement.

L'invention se rapporte à une composition pour peinture mate, plus préférentiellement pour peinture ultra mate dénommée aussi « mat profond ».

Selon l'indice de brillance ou brillant spéculaire ou encore brillant, les peintures sont classées selon quatre finitions (NF EN 13300 - fév. 2002) : très mate, mate, satinée et brillante. L'indice de brillance correspond à la faculté d'une surface à réfléchir la lumière. Le calcul de l'indice de brillance est normalisé (NF EN ISO 2813 : 2014) et déterminé selon la méthode décrite dans la norme ISO 2813 : 2014 qui spécifie une méthode pour la détermination de l'indice de brillance des revêtements selon trois géométries: 20°, 60° ou 85°. Une géométrie 60° signifie par exemple que, pour déterminer l'indice de brillance, de la lumière est projetée sur la peinture avec un angle de 60° et la quantité de lumière réfléchie selon le même angle de 60° est ensuite mesurée.

L'indice de brillance est indiqué en unités de brillance (UB) et se calcule sur une échelle allant de 0 à 100 UB. Le calcul de l'indice de brillance est effectué soit à 60° (BS 60°) pour les finitions brillantes et les satinées, soit à 85° (BS 85°) pour les finitions satinées et les mates.

Les peintures sont classés dans les catégories suivante selon la norme NF EN 13300 :
- mat si la valeur de réflectance sous l'angle d'indice 85° est inférieure à 10 UB et très mat si la valeur de réflectance est inférieure à 5 UB ;
- brillante si la valeur de réflectance sous l'angle 60° est supérieure ou égale à 60 UB;
- satinée lorsque la valeur de réflectance sous l'angle 60° est inférieure à 60 UB et sous l'angle 85° est supérieure ou égale à 10 UB.

Dans le cadre de la présente invention, on s'intéresse aux peintures usuellement appelées ultra mate ou « mat profond » pour lesquelles l'indice de brillance sous 85° est avantageusement inférieur ou égal à 2 UB.

Les peintures mates et ultra mates sont généralement particulièrement sensibles au lustrage. Ainsi, après un frottement, l'indice de brillance du feuil de peinture est augmenté. Dans le cadre de la présente invention, la résistance au lustrage est évaluée à l'aide d'un appareil d'abrasion humide de type DIN 53778. Une couche de peinture de 150 µm est appliquée sur une carte Leneta d'abrasion humide (carte PVC black scrub panel décrite dans la norme ISO 11998 : 2006, typiquement carte P121-10N - Labomat Essor). Après 7 jours de séchage à 23°C (± 2°C) et 50 % (±5%) d'humidité relative, l'indice de brillance du feuil non lustré est mesuré (moyenne de trois mesures). Le feuil de peinture est ensuite soumis à un cycle de 100 aller/retour d'une brosse, munie d'un chiffon en coton non pelucheux à usage unique, placée sur l'appareil d'abrasion humide. L'indice de brillance du feuil ainsi lustré est à nouveau mesuré (moyenne de trois mesures). La différence entre l'indice de brillance à 60° et à 85° avant et après lustrage est calculée, respectivement ΔBS Lustrage 60° et ΔBS Lustrage 85°. Plus cette différence est faible et plus la peinture est résistante au lustrage.

Les peintures, plus particulièrement les peintures mates et ultra mates, sont généralement particulièrement sensibles au marquage et au traçage. Afin d'évaluer le marquage et le traçage, une couche de peinture de 150 µm est appliquée sur une carte de contraste (typiquement carte de type Penopac 1A - Leneta Co. ou Byko Chart 2814 - Folio). Après 24 heures de séchage à 23°C (± 2°C) et 50 % (±5%) d'humidité relative, le test de marquage est réalisé en aveugle et reproduit au moins 3 fois pour chaque feuil de peinture. Le test est le suivant :
- on trace un trait sur le feuil en exerçant une pression avec le doigt puis avec l'ongle,
- on attribue une note comprise entre 0 et 5 (0 - absent de marquage ou trace sur le feuil / 5 - marque ou trace importante sur le feuil) à chaque feuil, la note d'un feuil correspond à la moyenne des différents essais réalisés (au moins 3 essais pour chaque feuil). La figure 1 illustre les résultats obtenus à l'aide de ce test du marquage/traçage.

Les peintures, en particulier les peintures pour revêtement muraux, sont également caractérisées par leur résistance à l'abrasion humide. Cette dernière correspond à la résistance du feuil de peinture à des lavages répétés et est déterminée selon la norme ISO 11998. Ainsi, plus une peinture est résistante à l'abrasion humide, moins il y a de perte d'épaisseur du feuil de peinture lors d'un frottement humide.

Selon la norme NF EN 13300, la résistance à l'abrasion humide est qualifiée selon les cinq classes répertoriées dans le tableau 1 ci-dessous :

| **Classification** | **Perte d'épaisseur du film** |
|---|---|
| Classe 1 | inférieure à 5µm après 200 frottements |
| Classe 2 | Supérieure ou égale à 5 et inférieure 20 µm après 200 frottements |
| Classe 3 | Supérieure ou égale à 20 µm et inférieure à 70 µm après 200 frottements |
| Classe 4 | inférieure à 70 µm après 40 frottements |
| Classe 5 | Supérieure ou égale à 70 µm après 40 frottements |

Ainsi, par exemple, une peinture résistante à l'abrasion humide de classe 1 signifie qu'un film obtenu à partir de cette peinture perd moins de 5 µm après 200 cycles de frottement humide.

Dans le cadre de la présente invention, la peinture sera considérée résistante à l'abrasion humide pour une perte d'épaisseur de film de moins de 20 µm (classe 2), préférentiellement, de moins de 5 µm (classe 1) dans le test d'abrasion humide selon la norme ISO 11998.

Sauf mention contraire, les définitions des normes ISO 1514 : « *Peintures et vernis* - *Panneaux normalisés pour* essais », ISO 2808 : « *Peintures et vernis* - *Détermination de l'épaisseur du feuil »* et ISO 4618:2014 : « *Peintures et vernis* - *Termes et définitions* » s'appliquent.

La taille (diamètre, distribution) des particules est évaluée par granulométrie laser selon la norme ISO 13320. Le diamètre médian et la distribution granulométrique des particules (par exemple la d50, correspondant à 50% des particules dont la taille est inférieure à la valeur indiquée) sont des paramètres bien connus de l'homme du métier.

Selon la présente invention, il a été découvert qu'une composition de base de peinture comprenant notamment un liant et une combinaison de charges sphériques organiques et inorganiques de diamètre médian sélectionné permet d'élaborer une peinture mate, préférentiellement une peinture de finition « mat profond », teintée ou non, présentant une résistance particulièrement améliorée en termes de lustrage, marquage et/ou traçage, ladite peinture étant en outre résistante à l'abrasion humide.

Sauf mention contraire, on entend par « composition de base » une composition de base transparente pour peinture, c'est-à-dire une composition ne comprenant pas de pigment, de pâte pigmentaire ou d'opacifiant.

Lorsque spécifié, la composition de base peut être une composition de base moyenne. Une telle composition de base moyenne comprend outre des composés de la composition de base transparente jusqu'à 10%, préférentiellement jusqu'à 8%, plus préférentiellement encore jusqu'à 6% en poids sec par rapport à la composition en humide d'au moins un agent opacifiant et/ou blanchissant.

Les compositions de base transparente ou moyenne sont notamment les formulations sous lesquelles la composition peut être fournie aux distributeurs qui effectueront par la suite un ajout éventuel de pigment(s) adapté à la demande particulière du client. Typiquement, jusqu'à 16% en volume de pâte(s) pigmentaire(s) sont ajoutés à la composition de base transparente ou moyenne, préférentiellement jusqu'à 14% en volume et plus préférentiellement jusqu'à 12% en volume. On entend par « pâte pigmentaire » (ou colorant) une composition contenant un ou plusieurs pigments. Généralement, une pâte pigmentaire comprend un ou plusieurs pigments (ou agents colorants) organiques ou minéraux, broyés et dispersés dans une base typiquement aqueuse ou huileuse.

La composition de base pour peinture selon l'invention comprend,
- jusqu'à 15%, préférentiellement 5 à 15% en pourcentage en poids sec par rapport au poids total de la composition de base en humide; de liant ;
- des charges comprenant :
   i) 1 à 15%, préférentiellement 2 à 10% en poids sec par rapport au poids total de la composition de base en humide, de charges sphériques inorganiques de diamètre médian compris entre 2 et 12 µm ;
   ii) 3 à 15%, préférentiellement 3 à 13% en poids sec par rapport au poids total de la composition de base en humide, de charges sphériques organiques de diamètre médian compris entre 10 à 40 µm ; et
- jusqu'à 75% en poids d'eau par rapport au poids total de la composition en humide.

Le liant de la composition selon l'invention peut être choisi parmi
- les résines, notamment les résines acryliques, styrène-acryliques, vinyliques et alkydes, préférentiellement en émulsion,
- les polyuréthanes (PU), les dispersions de polyuréthanes (PUD), prises seules ou en association. Dans le cas d'une association de liants, il peut s'agir d'une combinaison de résines à base de PUD et d'acrylique.

Selon un mode de réalisation préféré, le liant comprend au moins un ou est un liant acrylique. Le liant acrylique peut être notamment une résine acrylique ou une résine styrène acrylique. En particulier, le liant peut être un liant acrylique tel que par exemple le produit ENCOR 2710 commercialisé par la société Arkema (ES 41,5-43,5%, TMFF<5°C, taille particules 100 nm, pH 8-9, Tg = 10°C) ou, plus particulièrement un copolymère à base d'esters d'acide acrylique et méthacrylique, tel que par exemple le produit POLIDISP®778 commercialisé par la société Resiquimica, S.A.. Dans un mode de réalisation préféré, le liant est un liant styrène acrylique tel que par exemple l'UCAR LATEX DL420G commercialisé par DOW (ES 48 - 50%, TMMF∼20°C, Tg = 24°C). Un tel liant styrène acrylique permet d'améliorer la résistance à l'abrasion humide et permet notamment l'obtention d'une composition de classe 1 pour la résistance à l'abrasion humide.

La composition de base comprend jusqu'à 15% en poids sec de liant par rapport au poids total de la composition en humide, préférentiellement de 5 à 15% en poids sec, plus préférentiellement encore de 5 à 14% ou encore de 8 à 12% en poids sec. Une quantité de résine élevée dans la composition permet généralement une meilleure résistance à l'abrasion. Cependant, les présents inventeurs ont également constaté que l'indice de brillance à 60° et/ou 85° de la composition de base teintée ou non peut être particulièrement amélioré dans les quantités spécifiques et critiques précitées.

La composition comprend en outre des charges, en particulier elle comprend des charges sphériques organiques et inorganiques. Une telle combinaison de charges permet notamment d'améliorer la résistance au traçage et au marquage des peintures élaborées à partir de la composition.

Les charges sphériques inorganiques ont un diamètre médian spécifique et critique compris entre 2 et 12 µm, préférentiellement entre 2 et 6 µm, plus préférentiellement encore entre 3 et 5 µm. Dans un mode de réalisation particulièrement avantageux, les charges sphériques inorganiques présentent une distribution telle que :
- 0,1 µm ≤ d10 ≤ 2 µm, préférentiellement 0,5 µm ≤ d10 ≤ 1,5 µm ;
- 2 µm ≤ d50 ≤ 6 µm, préférentiellement 3 µm ≤ d50 ≤ 5 µm ; et
- 15 µm ≤ d90 ≤ 25 µm, préférentiellement 17 µm ≤ d90 ≤ 23 µm.

Les charges sphériques inorganiques sont présentes dans la composition à raison de 1 à 15% en poids sec par rapport au poids total de la composition de base en humide, préférentiellement de 2 à 10% et plus préférentiellement encore entre 3 et 7% en poids sec par rapport au poids total de la composition de base en humide.

Les charges sphériques inorganiques sont avantageusement choisies parmi les billes silicatées, avantageusement les billes silicatées dont la température de décomposition est supérieure à 900°C, préférentiellement les billes de verre et les billes de céramique, prises seules ou en association. Selon un mode de réalisation avantageux, il s'agit de billes de céramique. Les inventeurs ont mis en évidence de manière surprenante que, notamment en l'absence de toute autre charge que les charges sphériques organiques et inorganiques de la présente invention, les billes de céramique permettent l'obtention des meilleurs résultats en terme de résistance au traçage et au marquage.

Les charges sphériques organiques ont un diamètre médian spécifique compris entre 10 et 40 µm. Avantageusement, leur diamètre médian est compris entre 15 et 35 µm, voire même 22 et 30 µm. Dans un mode de réalisation particulièrement avantageux, les charges sphériques organiques présentent une distribution telle que 15 µm ≤ d50 ≤ 35µm , préférentiellement 22 µm ≤ d50 ≤ 30 µm, et d100 ≤ 150 µm , préférentiellement d100 ≤ 120 µm. Dans un mode de réalisation avantageux compatible avec les modes précédents, le diamètre médian (d50) des charges sphériques organiques est supérieur à celui des charges sphériques inorganiques.

Le diamètre médian des charges organiques sélectionné permet, en particulier, une excellente résistance au traçage et au marquage. De plus, un tel diamètre médian permet l'obtention d'une peinture mate, voire ultra mate, l'indice de brillance, notamment l'indice de brillance à 85° étant particulièrement diminué. Elles sont présentes dans la composition à hauteur de 3 à 15% en poids sec par rapport au poids total de la composition de base en humide, préférentiellement de 3 à 13% en poids sec par rapport au poids total de la composition de base en humide.

Dans un premier mode de réalisation, la quantité de charges sphériques organiques dans la composition est comprise entre 3 et 7% en poids sec, préférentiellement entre 4 et 6% en poids sec par rapport au poids total.

Dans un autre mode de réalisation, la quantité de charges sphériques organiques dans la composition est comprise entre 7 et 15% en poids sec, préférentiellement entre 8 et 12% en poids sec par rapport au poids total. La quantité de charges sphériques organiques spécifique et critique influe notamment particulièrement l'indice de brillance de la peinture issue de la présente composition.

Les charges sphériques organiques sont avantageusement choisies parmi les billes de polyuréthane (PU), les billes de polyacrylate (PA) ou de polyméthacrylate, notamment les billes de polyméthyle méthacrylate réticulé (PMMA), prises seules ou en association. Selon un mode de réalisation préféré, il s'agit de dispersions de polyuréthane (PUD). D'excellents résultats ont été obtenus en utilisant des dispersions creuses non déshydratées de polyuréthane.

Dans un mode de réalisation, la composition est substantiellement exempte de charges lamellaires. Par « substantiellement exempte » on entend une quantité de moins de 5% en poids sec par rapport au poids total de la composition de base en humide, préférentiellement moins de 3% et, plus préférentiellement encore moins de 1% ou encore moins de 0,5% ou même 0,1% en poids sec par rapport au poids total de la composition de base en humide.

La composition de base peut comprendre en outre jusqu'à 8%, préférentiellement 6%, plus préférentiellement encore 4% en poids sec par rapport au poids total de la composition en humide d'additifs, préférentiellement d'additifs choisis parmi les cires, les additifs siloxanés, les épaississants, les agents coalescents, les agents anti-sédimentation, les agents mouillants, les émulsifiants, les auxiliaires de formation de film, les conservateurs, les biocides, les agents antimousses, les dispersants et les additifs à effet anti-rouille (ou anti-flash rust), pris seuls ou en association. La cire permet notamment de diminuer l'indice de brillance de la composition et donne un aspect plus lisse au feuil de peinture. Les additifs siloxanés permettent notamment une résistance au lustrage sec.

Dans un mode de réalisation particulier, la composition comprend en outre jusqu'à 10% en poids sec de charge matante par rapport au poids total de la composition de base en humide, préférentiellement jusqu'à 5%, plus préférentiellement jusqu'à 3%. On entend ici par « charge matante » un composé permettant de diminuer l'indice de brillance de la peinture obtenue à partir de la composition.

La charge matante peut être choisie parmi les charges matantes organiques ou minérales, il peut s'agir notamment d'une association de charges de nature ou de type différents.

Selon un mode de réalisation avantageux, la charge matante est une poudre de plastique polycondensé, préférentiellement une poudre de plastique polycondensé dont les particules sont telles que 5 µm ≤ d50 ≤ 7 µm et 13 µm ≤ d90 ≤ 14 µm. A titre particulièrement préféré, il s'agit d'un méthylène-diamino-éthyléther polycondensé, par exemple du Deuteron MK commercialisé par la société Deuteron GmbH. Une telle charge matante permet notamment, dans la composition particulière selon l'invention, de diminuer l'indice de brillance tout en maintenant de bonnes propriétés de résistance aux marquage, traçage et lustrage.

Dans un mode de réalisation avantageux, la composition comprend :
- 1 à 15% en poids sec de charges sphériques inorganiques par rapport au poids total de la composition de base en humide, préférentiellement de 2 à 10% et plus préférentiellement encore entre 3 et 7% ;
- 3 à 7% en poids sec de charges sphériques organiques par rapport au poids total de la composition de base en humide, préférentiellement entre 4 et 6%;
- jusqu'à 10% en poids sec par rapport au poids total de la composition de base en humide de charge matante, préférentiellement jusqu'à 5%, plus préférentiellement de 0,5 à 3%.

Dans un autre mode de réalisation avantageux, la composition comprend notamment :
- 1 à 15% en poids sec de charges sphériques inorganiques par rapport au poids total de la composition de base en humide, préférentiellement de 2 à 10% et plus préférentiellement encore entre 3 et 7% ;
- 7 à 15% en poids sec de charges sphériques organiques par rapport au poids total de la composition de base en humide, préférentiellement entre 8 et 12%;
- moins de 5% en poids sec par rapport au poids total de la composition de base en humide de charge matante, préférentiellement moins de 1%, plus préférentiellement encore moins de 0,5% ou même moins de 0,25%.

Dans un mode de réalisation particulièrement avantageux, la composition de base présente :
- un indice de brillance sous 85°, BS 85°, inférieur à 2 ;
- une abrasion humide de classe 2, préférentiellement de classe 1 ;
- optionnellement une résistance au lustrage telle que ΔBS 85° soit inférieur à 0,2.

Les compositions de base transparente ou moyenne sont notamment les formulations sous lesquelles la composition peut être fournie aux distributeurs qui effectueront par la suite un ajout éventuel de pigment(s) adapté à la demande particulière du client. Typiquement, 16% en volume de pâte(s) pigmentaire(s) sont ajoutés à la composition de base transparente ou moyenne, préférentiellement jusqu'à 14% en volume et plus préférentiellement jusqu'à 12% en volume.

La composition de base moyenne pour peinture comprend :
- jusqu'à 15%, préférentiellement 5 à 15%, en pourcentage en poids sec par rapport au poids total de la composition en humide, de liant ;
- des charges comprenant :
   i) 1 à 15%, préférentiellement 2 à 10%, en pourcentage en poids sec par rapport au poids total de la composition en humide, de charges sphériques inorganiques de diamètre médian compris entre 2 et 12 µm,
   ii) 3 à 15%, préférentiellement 3 à 13%, en pourcentage en poids sec par rapport au poids total de la composition en humide, de charges sphériques organiques de diamètre médian compris entre 10 à 40 µm ;
- jusqu'à 10%, préférentiellement jusqu'à 8%, plus préférentiellement encore jusqu'à 6%, en pourcentage en poids sec par rapport au poids total de la composition en humide, d'au moins un agent opacifiant et/ou blanchissant et
- jusqu'à 75% en poids d'eau par rapport au poids total de la composition en humide.

La composition de base transparente ou moyenne ci-dessus décrite permet l'obtention d'une composition de peinture, notamment d'une peinture mate, ou même ultra mate, particulièrement destinée à être appliquée sur des façades et/ou des murs de bâtiment, préférentiellement sur des murs intérieurs.

La composition de base, transparente ou moyenne, ci-avant décrite est préférentiellement utilisable pour l'élaboration d'une peinture mate et teintable. Ladite peinture est particulièrement destinée à être appliquée sur des façades et/ou des murs de bâtiment, en particuliers des murs intérieurs.

D'autres objets et avantages de l'invention apparaîtront à la lecture des modes de réalisation particuliers ci-après exemplifiés et donnés à titre d'exemples non limitatifs.

### Exemples

Tous les exemples sont réalisés avec une composition de base transparente mate non teintée (TA) ou teintée avec une teinte T2130-4 (teinte foncée, référence du nuancier Totem de Tollens) de composition (1UM = 0,65 mL) :

**- préparation d'une base mate de composition :**

| **Composition** | **Quantité (% en poids en humide par rapport au poids total de la composition en humide)** | **Quantité (% en poids en sec par rapport au poids total de la composition en humide)** |
|---|---|---|
| Eau | Qsp 100 | - |
| Additifs (hors épaississants) | 3,3 | 1,1 |
| Epaississants | 6-8 | 1 - 3 |
| ENCOR 2710 d'Arkema* | 28,8 | 12,2 |

| | | |
|---|---|---|
| *Excepté pour les échantillons 13, 20 (POLIDISP7788) et 21 (UCAR LATEX DL420G) | | |

La formule de peinture est obtenue à partir de cette formule de base à laquelle sont ajoutées les différentes charges selon les ratios indiqués ci-dessous dans les tableaux 3, 4 et 6.

La teinte T2130-4 est réalisé selon la méthode suivante :
- ajout dans 0,93L de chaque formule de peinture de 18,5UM d'AR43 ; 42,1 UM d'UB05 ; 8 UM d'AW41 ; 39,7UM d'UV08 (1UM = 0,65mL). AR43, UB05, AW41 et UV08 sont des pâtes pigmentaires de la société Cromology.

### Exemple 1

L'impact des charges, notamment en termes de nature chimique et de d50 (µm), sur l'indice de brillance à 60 et 85°, le lustrage, les propriétés de résistance à l'abrasion humide et de résistance à la rayure a été évalué pour la composition de base transparente mate décrite précédemment.

Les caractéristiques des différentes charges utilisées sont données dans le tableau 3 ainsi que les résultats relatifs aux propriétés d'intérêt.

| | **Nature des charges** | **d50 (µm)** | **Echantillon 1** | **Echantillon 2** (référence) | **Echantillon 3** (référence) | **Echantillon 4** (référence) | **Echantillon 5** (référence) |
|---|---|---|---|---|---|---|---|
| **Charges** (quantité indiquée en % en poids sec par rapport au poids total de la composition en humide) | | | | | | | |
| W410 (3M) | céramique | 4 | 5 | | | | |
| Sphaerawet TR25 (Lamberti) | PUD¹ (micro-sphères^{#}) | 26 | 4,9 | | | 4,9 | |
| Sphaerawet TR7F (Lamberti) | PUD 1 (micro-sphères^{#}) | 7 | | 3,5 | | 3,5 | |
| W610 (3M) | céramique | 10 | | 7 | | | |
| Spheriglass 7025 (Potters) | verre | 10 | | | 5 | | |
| Spheriglass 2000 (Potters) | verre | 32 | | | 7 | | |
| Spheromer CA10 (Microbeads) | PMMA² | 10 | | | | | 5 |
| Spheromer CA20 (Microbeads) | PMMA² | 20 | | | | | 7 |

| **Propriétés** | | | | | | | |
|---|---|---|---|---|---|---|---|
| BS (60/85°) TA^{§} (UB) | | | 3,2/0,7 | 4,2/2,4 | 5,3/1,4 | 3,1/0,7 | 2,5/1,2 |
| BS (60/85°) T2130-4^{£} (UB) | | | 2,3/0,7 | 3,4/3,6 | 4,6/1,9 | 1,5/0,8 | 0,9/1,2 |
| ΔBS Lustrage 60° | | | +0,1 | -0,3 | -0,2 | 0 | 0 |
| ΔBS Lustrage 85° | | | +0,1 | +0,9 | +0,1 | +0,3 | +0,5 |
| Abrasion humide (perte d'épaisseur en µm) | | | 7,4 | 3,6 | 3,9 | 12,7 | 12,3 |
| Résistance rayure* | | | 1 | 4 | 4 | 1 | 2 |

| | | | | | | | |
|---|---|---|---|---|---|---|---|
| ¹PU: polyuréthane ; ²PMMA : polyméthyle méthacrylate ; *Attribution d'une note comprise entre 0 et 5 (0 - absence de marquage ou trace sur le feuil / 5 - marque ou trace importante sur le feuil) ; ^{#} dispersions non déshydratées de polyuréthane ; ^{§}Evaluation réalisée avec un échantillon d'une composition de base transparente mate non teintée (TA) ; ^{£}Evaluation réalisée avec un échantillon d'une composition base teintée avec une teinte T2130-4 (teinte foncée, référence du nuancier Totem de Tollens) de composition (1UM = 0,65 mL). | | | | | | | |

L'échantillon 1 présente une excellente combinaison de propriétés. L'échantillon 2 présente un indice de brillance élevé ainsi qu'une haute sensibilité au lustrage et à la rayure. L'échantillon 3, qui a également un indice de brillance plus élevé est sensible à la rayure mais présente une bonne résistance à l'abrasion humide. Les échantillons 4 et 5 présentent une moins bonne résistance à l'abrasion humide et au lustrage.

### Exemple 2

L'impact des charges et des additifs sur l'indice de brillance à 60 et 85°, le lustrage, les propriétés de résistance à l'abrasion humide et de résistance à la rayure a été évalué pour la composition de base transparente mate décrite précédemment.

La nature des charges et des additifs utilisés sont données dans le tableau 4 ainsi que les résultats relatifs aux propriétés d'intérêt.

| | **Charges** | | | **Additifs** | | **Propriétés** | | | | | |
|---|---|---|---|---|---|---|---|---|---|---|---|
| | **W410³** | **SPHERA-WET TR2S⁴** | **SPHERA-WET TR15⁵** | **DEUTERON MK⁶** | **CO-ATHYLENE⁷** | **BS (60/85°) TA^{§}** | **BS (60/85°) T2130-4^{£}** | **ΔBS Lustrage 60°** | **ΔBS Lustrage 85°** | **Abrasion humide** (perte d'épaisseur en µm) | **Résistance rayure** |
| | % en poids sec par rapport au poids total de la composition en humide | | | | | (UB) | (UB) | | | | |
| **KeraPaint Premium¹** | | | | | | 2,3/0,9 | 0,3/0,8 | | 0,3 | 30 | |
| **Echantillon 6** | 5 | 9,9 | | | | 2,4/0,6 | 0,6/0,6 | 0 | 0 | | 0 |
| **Echantillon 7** | 5 | 7 | | | | 2,7/0,6 | 1,2/0,6 | -0,1 | 0,3 | | 1 |
| **Echantillon 1** | 5 | 4,9 | | | | 3,2/0,7 | 2,3/0,7 | 0,1 | 0,1 | 7,4 | 1 |
| **Echantillon 8** | 5 | 4,9 | | 1 | | 2,4/0,6 | 0,7/0,5 | 0 | 0,3 | 8,8 | 1 |
| **Echantillon 9** | 3 | 8,4 | | | | 2,6/0,6 | 1,0/0,6 | 0 | 0,35 | | 1 |
| **Echantillon 10** | 3 | 4,9 | | | | 3,7/0,6 | 2,5/0,7 | -1.2 | -1.9 | | 1 |
| **Echantillon 11** | 5 | 9,9 | | | | 2,4/0,5 | 0,5/0,6 | - | - | 8,6 | 0 |
| **Echantillon 12** | 5 | 4,9 | | 1 | | 2,4/0,6 | 1,1/0,7 | 0 | 0,3 | 7,4 | 1 |
| **Echantillon 13** | 5 | 4,9 | | 1 | | 2,6/0,7 | 1,1/0,7 | 0 | 0,4 | | 0 |
| **Echantillon 14** | 5 | 4,9 | | 1 | | 2,6/0,6 | 0,9/0,6 | | | | 1 |
| **Echantillon 15** | 3 | 2,5 | 2,5 | | | 3,2/1,0 | 2,0/1,1 | | | 8 | 0 |
| **Echantillon 16** | 5 | 4,9 | | | 1 | 3,6/0,6 | 1,8/0,7 | | | 8,5 | 2 |
| **Echantillon 17** | 5 | 4,9 | | 1 | 2 | 2,4/0,5 | 0,7/0,5 | | | | 3 |
| **Echantillon 18** | 6 | 4,2 | | 1 | | 2,6/0,7 | 1,1/0,7 | -0.4 | 0.4 | 10,5 | 2 |
| **Echantillon 19** | 5 | 4,9 | | 2 | | 2,2/0,7 | 0,5/0,5 | | | 6,9 | 2 |
| **Echantillon 21** | 5 | 4,9 | | 1 | | 2,7/0,7 | 1,1/0,7 | 0 | +0,2 | 4,6 | 1 |

| | | | | | | | | | | | |
|---|---|---|---|---|---|---|---|---|---|---|---|
| ¹KeraPaint Premium (KeraPaint Premium IFP 1369) est une peinture mate profonde en base transparente commercialisée par la société PROFITEC ; ³W410 correspond à des billes céramiques (d50 = 4 µm) ; ⁴ Sphaerawet TR25 correspond à des billes de PUD creuses (d50 = 26 µm) ; ⁵ Sphaerawet TR15 correspond à des billes de PUD (d50 = 15 µm) ; ⁶Deuteron MK, commercialisé par Deuteron GmbH, est une charge matante ; il s'agit d'un plastique polycondensé tel que d50 = 6,3 µm, d90=13,8 µm ; ⁷Coathylène est une poudre thermoplastique de polymère haute densité. évaluation réalisée avec un échantillon d'une composition de base transparente mate non teintée (TA) ; ^{£}Evaluation réalisée avec un échantillon d'une composition base teintée avec une teinte T2130-4 (teinte foncée, référence du nuancier Totem de Tollens) de composition (1UM = 0,65 mL). | | | | | | | | | | | |

Les échantillons 6 et 11 présentent une matité intense (BS (60/85°) TA et T2130-4 particulièrement bas), une bonne résistance à la rayure et pour l'échantillon 6 une très bonne résistance au lustrage. L'échantillon 10 présente un fort indice de brillance sous 60°. L'ajout de Deuteron MK ne dégrade pas les bonnes propriétés de résistance à la rayure et dégrade très légèrement la résistance au lustrage tout en permettant d'avoir une meilleure matité selon les échantillons 8, 12. Le Coathylène dégrade lui la résistance à la rayure, selon les échantillons 16 et 17. L'échantillon 21 a été élaboré à base d'un liant styrène acrylique (UCAR LATEX DL420G, DOW). Il présente d'excellents résultats, notamment une résistance à l'abrasion humide encore plus améliorée par rapport à l'échantillon 1.

### Exemple 3

L'impact du liant sur l'indice de brillance à 60 et 85° de la composition de base transparente teintée (Teinte 2130-4, Nuancier Totem Tollens) ou non teintée, le lustrage, les propriétés de résistance à la rayure ont été évalués pour la composition de base transparente mate décrite précédemment (échantillon 1), cette même composition de base transparente dans laquelle le liant (résine acrylique fines particules, plus particulièrement Encor® 2710 commercialisée par la société Arkema (ES 41,5-43,5%, TMFF<5°C , taille particules 100 nm, pH 8-9) a été remplacé par une résine acrylique classique (échantillon 20, résine acrylique : Polidisp® 7788 commercialisée par la société Resiquimica, ES 49-51%, Tg environ 10°C, TMFF<5°C, taille particules environ 0,10 microns). Les résultats sont présentés dans le tableau 5.

| | **BS 60° non teinté** (UB) | **BS 85° non teinté** (UB) | **BS 60° teinté** (UB) | **BS 85° teinté** (UB) | **ΔBS Lustrage 60°** | **ΔBS Lustrage 85°** | **Traçage*** |
|---|---|---|---|---|---|---|---|
| **Echantillon 1** | 3,2 | 0,7 | 2,3 | 0,7 | 0,1 | 0,1 | **1** |
| **Echantillon 20** | 2,6 | 0,7 | 0,9 | 0,7 | 0 | 0,4 | 1/2 |

| | | | | | | | |
|---|---|---|---|---|---|---|---|
| *Attribution d'une note comprise entre 0 et 5 (0 - absent de marquage ou trace sur le feuil / 5 - marque ou trace importante sur le feuil) | | | | | | | |

### Exemple 4

D'excellents résultats ont en particulier été obtenus avec la composition détaillée dans le tableau 6. La composition de base relative à la composition ci-dessous correspond à l'échantillon 21 de l'exemple 2 précédent.

| **Composition** | **Quantité (% en poids en humide par rapport au poids total de la composition en humide)** |
|---|---|
| Eau | 56,3 |
| Anti-mousse | 0,1 |
| Agent neutralisant | 0,1 |
| Biocide | 0,3 |
| Dispersant | 0,3 |
| Agent mouillant | 0,8 |
| Additif à effet anti-rouille immédiat | 3 |
| Billes de céramiques W-410 | 5 |
| Sphaerawet TR25 (matière sèche : 70%) | 7 |
| DEUTERON MK | 1 |
| UCAR LATEX DL 420G | 21,7 |
| Agent coalescent | 1,6 |
| Antimousse | 0,1 |
| Epaississant associatif newtonien | 1 |
| Epaississant associatif moyen cisaillement (mid-shear) | 0,8 |
| Epaississant, anti-sédimentation | 0,3 |
| Epaississant cellulosique | 0,6 |

## Revendications

1. Composition de base pour peinture comprenant :
- en pourcentage en poids sec par rapport au poids total de la composition en humide,
a. jusqu'à 15%, préférentiellement de 5 à 15% de liant ;
b. des charges comprenant :
b.1) 1 à 15%, préférentiellement 2 à 10%, plus préférentiellement encore 3 à 7% de charges sphériques inorganiques de diamètre médian compris entre 2 et 12 µm,
b.2) 3 à 15%, préférentiellement 3 à 13% de charges sphériques organiques de diamètre médian compris entre 10 et 40 µm ; et
- jusqu'à 75% en poids d'eau par rapport au poids total de la composition en humide.

2. Composition selon la revendication 1, dans laquelle le liant est choisi parmi les résines acryliques, styrène-acryliques, vinyliques ou alkydes, ou encore les résines à base de polyuréthane ou comprenant des dispersions de polyuréthane, prises seules ou en association.

3. Composition selon la revendication 2, dans laquelle le liant est une résine acrylique, préférentiellement une résine acrylique ou une résine styrène acrylique.

4. Composition selon l'une quelconque des revendications précédentes, dans laquelle les charges sphériques inorganiques ont un diamètre médian compris entre 2 et 6 µm, préférentiellement entre 3 et 5 µm.

5. Composition selon l'une quelconque des revendications précédentes, dans laquelle les charges sphériques inorganiques sont choisies parmi les billes silicatées, préférentiellement les billes de verre et les billes de céramique, prises seules ou en association.

6. Composition selon l'une quelconque des revendications précédentes, comprenant de 3 à 7%, préférentiellement de 4 à 6% en poids sec de charges sphériques organiques par rapport au poids total de la composition en humide ou de 7 à 15%, préférentiellement de 8 à 12% en poids sec de charges sphériques organiques par rapport au poids total de la composition en humide.

7. Composition selon l'une quelconque des revendications précédentes, dans laquelle les charges sphériques organiques ont un diamètre médian compris entre 15 et 35 µm, préférentiellement entre 22 et 30 µm.

8. Composition selon l'une quelconque des revendications précédentes, dans laquelle les charges sphériques organiques sont choisies parmi les billes de polyuréthane, les billes de polyacrylate ou polyméthacrylate, prises seules ou en association.

9. Composition selon la revendication 8, dans laquelle les charges sphériques organiques sont des dispersions non déshydratées de polyuréthane.

10. Composition selon l'une quelconque des revendications précédentes, comprenant en outre jusqu'à 8%, préférentiellement 6%, plus préférentiellement encore 4% en poids sec par rapport au poids total de la composition en humide d'additifs, préférentiellement d'additifs choisis parmi les cires, les additifs siloxanés, les épaississants, les agents coalescents, les agents anti-sédimentation, les agents mouillants, les émulsifiants, les auxiliaires de formation de film, les conservateurs, les biocides, les agents antimousses, les dispersants et les additifs à effet anti-rouille, pris seuls ou en association.

11. Composition selon l'une quelconque des revendications précédentes, comprenant en outre jusqu'à 10% en poids sec de charge matante par rapport au poids total de la composition de base en humide, préférentiellement jusqu'à 5%, plus préférentiellement jusqu'à 3%.

12. Composition de base moyenne pour peinture comprenant :
- en pourcentage en poids sec par rapport au poids total de la composition en humide,
a. jusqu'à 15%, préférentiellement 5 à 15% de liant ;
b. des charges comprenant :
b.1) 1 à 15%, préférentiellement 2 à 10% de charges sphériques inorganiques de diamètre médian compris entre 2 et 12 µm,
b.2) 3 à 15%, préférentiellement 3 à 13% de charges sphériques organiques de diamètre médian compris entre 10 et 40 µm ;
b. 3) jusqu'à 10%, préférentiellement jusqu'à 8%, plus préférentiellement encore jusqu'à 6% d'au moins un agent opacifiant et/ou blanchissant et
- jusqu'à 75% en poids d'eau par rapport au poids total de la composition en humide.

13. Composition de peinture obtenue à partir de la composition de base selon l'une quelconque des revendications précédentes.

14. Composition de peinture selon la revendication 13, comprenant en outre jusqu'à 16% en volume de pâte(s) pigmentaire(s), préférentiellement jusqu'à 14% en volume et plus préférentiellement jusqu'à 12% en volume.

15. Utilisation de la composition selon l'une quelconque des revendications 1 à 12, pour la fabrication d'une peinture, préférentiellement une peinture mate.
